# EUROPÄISCHE PATENTANMELDUNG

(11) **EP 1 875 985 A1**
(43) Veröffentlichungstag der Anmeldung: **09.01.2008**
(21) Anmeldenummer: 06013732.0
(22) Anmeldetag: 03.07.2006
(51) Int. Cl.: B23Q 5/10, H02P 25/02

(54) **Synchronmotor zum Antrieb eines Bearbeitungswerkzeugs**

(71) Anmelder: Homag Holzbearbeitungssysteme AG, 72296 Schopfloch (DE)
(72) Erfinder: Gauss, Achim, 72280 Dornstetten/Hallwangen (DE)
(74) Vertreter: HOFFMANN EITLE

(57) **Zusammenfassung**

Eine Werkzeugmaschine zur Bearbeitung von Werkstücken mit einem Motor zum Antrieb eines Bearbeitungswerkzeugs ist dadurch gekennzeichnet, dass der Motor ein Synchronmotor ist, der einen rückführungsfreien Regelkreis aufweist. Dadurch wird ein einfacher, kostengünstigerer Aufbau bei hoher Leistungsdichte und geringem Gewicht realisiert, der sich insbesondere zum Einsatz in hochdynamischen Anwendungen eignet.

## Beschreibung

Die vorliegende Erfindung bezieht sich auf eine Werkzeugmaschine zur Bearbeitung von Werkstücken mit einem Motor zum Antrieb eines Bearbeitungswerkzeugs, insbesondere eines Fräswerkzeugs.

### Stand der Technik

Für die Bearbeitung von Werkstücken werden bei dynamischen Aggregaten heute vorwiegend asynchrone Drehstrommotoren als Werkzeugantrieb verwendet, wobei der Hauptgrund für ihren Einsatz die geringen Herstellungskosten und ihre längere Lebensdauer im Vergleich zu Synchronmotoren sind. Jedoch besitzen Asynchronmotoren eine geringere Leistungsdichte, d.h. ein größeres Gewicht und Volumen pro Drehmoment, und einen schlechteren Wirkungsgrad bei hoher Drehmomentausnutzung. Insbesondere bei der Fräsbearbeitung entstehen zudem sehr unterschiedliche Vorschubgeschwindigkeiten der Werkstücke (z.B. beim Kopieren der Werkstückecke), die eine unterschiedliche Belastung des Antriebs und somit des asynchronen Drehfelds bewirken. Aufgrund dieser Belastung des asynchronen Drehfelds während der Fräsbearbeitung unterliegen Asynchronmotoren demnach Drehzahlschwankungen, die zu einer Veränderung der mittleren Spandicke und somit zu einer schlechteren Fräsqualität führen können. Außerdem ist bei Asynchronmotoren eine Drehzahlregelung nur mit aufwändiger Polumschaltung oder mit Frequenzreglern möglich.

Synchronmotoren haben im Gegensatz zu Asynchronmotoren eine höhere Leistungsdichte, jedoch laufen sie nicht von allein an, sondern müssen mechanisch hochgefahren und synchronisiert werden. Weiterhin besteht bei Synchronmotoren die Gefahr, dass bei hohen Belastungen der Polradwinkel (der Verdrehwinkel zwischen dem Rotor des belasteten und des unbelasteten Motors) zu groß wird und der Motor im Betrieb stehen bleibt und wieder angefahren und synchronisiert werden muss. Um dies zu verhindern, ist bei Synchronmotoren stets eine Rückführung des Drehzahlsignals zum Regler (Soll-IstVergleich) vorgesehen, der dadurch den Motor auf eine möglichst konstante Drehzahl auch bei hohen Belastungen regelt. Es ist also eine Sensorik im Synchronmotor vorhanden, die den Aufbau komplizierter und noch teurer macht. Aus diesen Gründen werden trotz der Vorteile des Synchronmotors im Hinblick auf Leistungsdichte und Wirkungsgrad weiterhin zumeist Asynchronmotoren als Antrieb für Fräsen und ähnliche Aggregate von Werkzeugmaschinen eingesetzt.

### Darstellung der Erfindung

Es ist somit eine Aufgabe der vorliegenden Erfindung, eine Werkzeugmaschine zur Bearbeitung von Werkstücken mit einem Motor zum Antrieb eines Bearbeitungswerkzeugs zu entwickeln, der nicht nur die Vorteile des Synchronmotors gegenüber dem Asynchronmotor aufweist sondern auch einen im Vergleich zu den traditionell eingesetzten Synchronmotoren einfacheren und kostengünstigeren Aufbau hat. Diese Aufgabe wird durch eine Werkzeugmaschine nach Anspruch 1 gelöst. Vorteilhafte Ausführungsformen ergeben sich aus den Unteransprüchen.

Eine erfindungsgemäße Werkzeugmaschine zur Bearbeitung von Werkstücken mit einem Motor zum Antrieb eines Bearbeitungswerkzeugs ist dadurch gekennzeichnet, dass der Motor ein Synchronmotor ist, der einen rückführungsfreien Regelkreis aufweist. Die Erfinder haben nämlich festgestellt, dass bei der Bearbeitung von Holzwerkstoffen, Kunstwerkstoffen und dergleichen in der Regel keine Bearbeitungskräfte auftreten, die zu einem Stillstand bzw. Festfressen des Verarbeitungswerkzeugs führen könnten. Es ist also möglich einen Synchronmotor mit rückführungsfreiem Regelkreis einzusetzen und somit die Vorteile des Synchronmotors, nämlich die hohe Leistungsdichte, den hohen Wirkungsgrad sowie die konstante Drehzahl des synchronen Drehfelds, zu nutzen. Die rückführungsfreie Ansteuerung beeinträchtigt die Drehzahl und somit die Bearbeitungsqualität nicht. Im Gegenteil erlaubt ein Verzicht auf die Rückführung im Regelkreis einen konstruktiv einfacheren Aufbau des Synchronmotors. Da der Synchronmotor im Gegensatz zum Asynchronmotor keinem Schlupf (d.h. einem Unterschied zwischen vorgegebener Drehfeld-Drehzahl und tatsächlicher Rotor-Drehzahl) unterworfen ist, erlaubt die konstante Drehzahl zudem eine bessere Bearbeitung.

In einer vorteilhaften Ausführung umfasst der Regelkreis einen Drehzahlgeber, der die Drehzahl des Synchronmotors vorgibt. Da der Synchronmotor, wie bereits erwähnt, keinen Schlupf aufweist, ist eine präzise und definierte Drehzahländerung während der Bearbeitung möglich. Dies erlaubt es, insbesondere an kritischen Bearbeitungspunkten wie Ecken ein stabiles Drehmoment sowie eine gleich bleibende mittlere Spandicke zu erreichen, was zu einer deutlichen Verbesserung der Bearbeitungsqualität führt.

Die Werkzeugmaschine ist bevorzugt eine dynamische Werkzeugmaschine, bei welcher der Synchronmotor bewegbar gelagert ist. Hier kommt das geringere Gewicht des Synchronmotors vorteilhaft zum Tragen, da eine geringere Masse bewegt werden muss als bei den schwereren Asynchronantrieben. Die Gewichtsreduzierung trägt auch zu einem einfacheren Aufbau bei sowie zu geringeren Tastkräften bei dynamischen Aggregaten, was sich wiederum positiv auf die Bearbeitungsqualität, insbesondere bei empfindlichen Werkstücken, auswirkt.

Schließlich ist das Werkzeug vorzugsweise eine Formfräse oder ein Kappaggregat. Insbesondere beim Fräsen und Kappen treten solche Bearbeitungskräfte auf, die den Einsatz eines Synchronmotors mit rückführungsfreiem Regelkreis ermöglichen. Weiter ist gerade bei diesen Aggregaten ein geringes Gewicht der Aggregate mit Antrieben von Bedeutung, zumal derartige Aggregate vermehrt unter hochdynamischen Bedingungen eingesetzt werden.

### Wege zur Ausführung der Erfindung

Im folgenden wird der Aufbau eine Werkzeugmaschine zur Bearbeitung von Werkstücken mit einem Motor zum Antrieb eines Bearbeitungswerkzeugs als nicht einschränkendes Beispiel der Erfindung beschrieben.

Ein zum Beispiel nach dem Durchlaufverfahren arbeitende Werkzeugmaschine weist hierbei eine kontinuierlich vorwärts bewegte Auflage für ein zu bearbeitendes Werkstück sowie eine Führung für ein mitlaufendes Fräsaggregat auf, wobei diese Führung zum Beispiel eine bekannte Parallelogrammführung sein kann. Auf dieser Führung ist ein Formfräsaggregat bewegbar angebracht, das von einem Synchronmotor mit rückführungsfreiem Regelkreis angetrieben wird. Der Regelkreis besteht hierbei aus einem Drehzahlgeber, der dem Synchronmotor eine der Bearbeitungsposition anpassbare Drehzahl vorgibt. Nach Anlegen des Fräswerkzeugs wird somit mit der vorgegebenen Drehzahl die Fräsbearbeitung durchgeführt, wobei aufgrund der Abwesenheit von Schlupf eine gleich bleibende mittlere Spandicke und dadurch hohe Bearbeitungsqualität erzielt werden.

## Patentansprüche

1. Werkzeugmaschine zur Bearbeitung von Werkstücken mit einem Motor zum Antrieb eines Bearbeitungswerkzeugs,
**dadurch gekennzeichnet, dass**
der Motor ein Synchronmotor ist, der einen rückführungsfreien Regelkreis aufweist.

2. Werkzeugmaschine nach Anspruch 1, **dadurch gekennzeichnet, dass** der Regelkreis einen Drehzahlgeber umfasst, der die Drehzahl des Synchronmotors vorgibt.

3. Werkzeugmaschine nach Anspruch 1 oder 2, **dadurch gekennzeichnet, dass** die Werkzeugmaschine eine dynamische Werkzeugmaschine ist, bei welcher der Synchronmotor bewegbar gelagert ist.

4. Werkzeugmaschine nach Anspruch 1, 2 oder 3, **dadurch gekennzeichnet, dass** das Werkzeug eine Formfräse oder ein Kappaggregat ist.
